**Europäisches Patentamt**

**European Patent Office**

**Office européen des brevets**

(19)

(11) Publication number: **0 116 419**
A2

(12)

# EUROPEAN PATENT APPLICATION

(21) Application number: **84300392.2**

(22) Date of filing: **23.01.84**

(51) Int. Cl.³: **F 02 M 37/08**
**F 02 M 31/12, F 04 B 17/04**

(30) Priority: **26.01.83 GB 8302158**

(43) Date of publication of application:
**22.08.84 Bulletin 84/34**

(84) Designated Contracting States:
**DE FR GB IT SE**

(71) Applicant: **Wallis, Brian**
**10 Grove Crescent**
**Hanworth Middlesex(GB)**

(72) Inventor: **Wasley, Roy**
**3 Bridge Foot Green Street**
**Sunbury-on-Thames Middlesex(GB)**

(74) Representative: **Warren, Anthony Robert et al,**
**BARON & WARREN 18 South End Kensington**
**London W8 5BU(GB)**

(54) **Apparatus for heating diesel engine fuel.**

(57) The invention relates to an electromagnetic fuel pump (P) which is incorporated in an existing diesel engine fuel supply system, and is intended both to pump diesel fuel when in a relatively low temperature, viscous state, and to heat the fuel. The pump (P) includes a solenoid (13), the core (17) of which constitutes the piston. The solenoid (13) is submerged in, and in intimate heat-transfer relation with, the fuel pump (P), so that heat generated in the solenoid winding (13a) due to energisation thereof serves to heat the fuel in the pump.

EP 0 116 419 A2

Fig.1

## APPARATUS FOR HEATING DIESEL ENGINE FUEL

The present invention relates to apparatus for heating diesel engine fuel, and to a diesel engine fuel system, primarily for road vehicles, incorporating the same.

A diesel engine fuel system commonly incorporates, in the fuel supply line between the fuel tank and engine injector pump, a water trap filter, a fuel lift pump, and a final filter. The lift pump draws fuel from the tank via the water trap filter, and conveys it to the injector pump via the final filter. In cold ambient conditions, when the fuel temperature drops to or below its Cloud Point (commonly of the order of -10 to -12$^{\circ}$C), wax crystals form in the fuel which clog the relatively fine pores of the filter element of the final filter. As a result, the engine tends to start satisfactorily, but starves and stalls after a relatively short period when the fuel between the clogged final filter and engine is used up.

It has previously been proposed to dissolve the wax clogging the final filter by heating the final filter or fuel supplied thereto, for example by using heat generated by the engine, or by using an electrical heater.

However, at relatively low temperatures significantly below the Cloud Point, for example of the order of -15$^{\circ}$C or less, the fuel waxes to such an extent that it becomes relatively viscous, taking on the consistency of thick grease, and effectively solidifies in the fuel lines, and also clogs the filter element, for example gauze screen, of the water trap filter. Whilst the type of diesel engine fuel system commonly in use in road vehicles in the United Kingdom incorporates an injector pump which is capable of moving the solidified fuel from the downstream side of the final filter to the injectors, the lift pump is usually incapable of moving the solidified fuel in the line (for example 0.25 inch internal diameter line) over the substantial distance from the tank to the final filter. The previously proposed heating techniques suffer from the disadvantage that they only heat the fuel and melt the wax locally in the region of the final filter so that, under low temperature conditions, due to the inability of the lift pump to move the solidified fuel, the previously mentioned problem occurs, namely the engine will initially start satisfactorily, but will starve and stall after a relatively short period.

It is an object of the present invention to alleviate or effectively overcome this problem, in a manner which is capable of being put into practice with the minimum of modifications to existing conventional diesel engine fuel systems.

From one aspect, the invention provides an electromagnetic pump capable of pumping diesel fuel when in a relatively low temperature viscous or virtually solid condition, and operable to transfer heat generated in the electromagnetic winding means of the pump to the fuel.

The invention also consists in a diesel engine fuel system incorporating a pump as herein defined, and a diesel engined vehicle incorporating such a system.

In a first embodiment of system, the pump is connected in series in the main fuel line between the fuel tank and the upstream side of the filter element of the final filter, and a return line connects the upstream side of the filter element to the pump whereby, when the pump is in its pumping mode, fuel heated by the pump is supplied to the upstream side of the filter element and excess fuel is returned to the pump.

In a second embodiment, the pump, when in its pumping mode, pumps heated fuel to and through the final filter, to the injectors, and back to the tank via a return line. The return line may be the conventionally provided overspill line which, during normal engine operation, returns excess fuel from the engine injectors to the tank.

The pump may include a pump housing having at least one fuel inlet, and a fuel outlet, the pump further including a solenoid having an energising winding and an armature or core which is axially reciprocable within the energising winding upon energisation and/or de-energisation of the solenoid. The armature forms, or is connected to drive, a piston which, in the pumping mode of the pump, is operable to positively displace fuel towards the final filter. Non-return valve means are provided, operable to allow fuel to be drawn through the electromagnetic pump towards the engine by the conventional lift pump of the system when the electromagnetic pump is in a non-pumping mode.

The pump may be associated with control means operable to sense the temperature of the pump housing, or fuel therein, and maintain the winding in a de-energised state (de-energised, non-pumping mode) until the temperature drops to or below a value in the region of, or below, the Cloud Point of the fuel. The control means may also be operable, when the temperature drops to or below the set value, either to continuously energise the winding (energised, non-pumping mode) to heat up the winding and therefore fuel in or flowing through the housing ,or to pulse the winding (pumping mode) and thereby reciprocate the pump piston, thus both heating and pumping the fuel.

In the first embodiment of system mentioned previously, the control means is operable, when the temperature is below the set value, and when the engine is initially started up from cold, to initially maintain the pump in its energised non-pumping mode for a short period of time, then to switch to its pumping mode, and then switch back to its energised non-pumping mode for as long as the low temperature conditions persist. The residual fuel in the electromagnetic pump is heated during the first stage of this sequence, and in the second stage, is circulated by the electromagnetic pump, via the lift pump, to the final filter, and back to the electromagnetic pump, to heat and unclog the filter element of the filter, before the fuel on the downstream side of the filter is used up and the engine stalls. The pumping action is powerful enough to displace any relatively viscous or effectively solid fuel between the electromagnetic pump and final filter. In the final stage of the sequence, the lift pump takes over from the electromagnetic pump, drawing heated .fuel from the latter and pumping it to the final filter.

In the second embodiment of system mentioned previously, the control means is operable, when the temperature is below the set value, and when the engine is switched off for a long period of time, for example when the vehicle is parked overnight, to cause the electromagnetic pump to circulate heated fuel through the fuel system and back to the tank at regular time intervals, to maintain the temperature of the fuel in the system at an acceptable value.

The pump may incorporate a water trap filter, and is preferably adapted to be readily interchangeable with, and replace, the water trap filter of a conventional diesel engine fuel system. The heat generated by the electromagnetic pump will then also serve to heat and unclog the water trap filter element. Furthermore, since the water trap filter is usually mounted relatively close to the tank, only the fuel in a relatively short length of line between the tank and water trap filter will not be heated by the pump.

In order that the invention may be more readily understood reference will now be made to the accompanying drawings, in which:-

Figure 1 is a longitudinal axial section through one embodiment of electromagnetic fuel pump, shown in its de-energised condition;

Figure 2 is a diagram of the electrical control circuitry of the pump of Figure 1;

Figure 3 shows, in schematic form, one embodiment of diesel engine fuel system incorporating the pump of Figures 1 and 2; and

Figure 4 shows, in schematic form, a second embodiment of fuel system incorporating the pump of Figures 1 and 2.

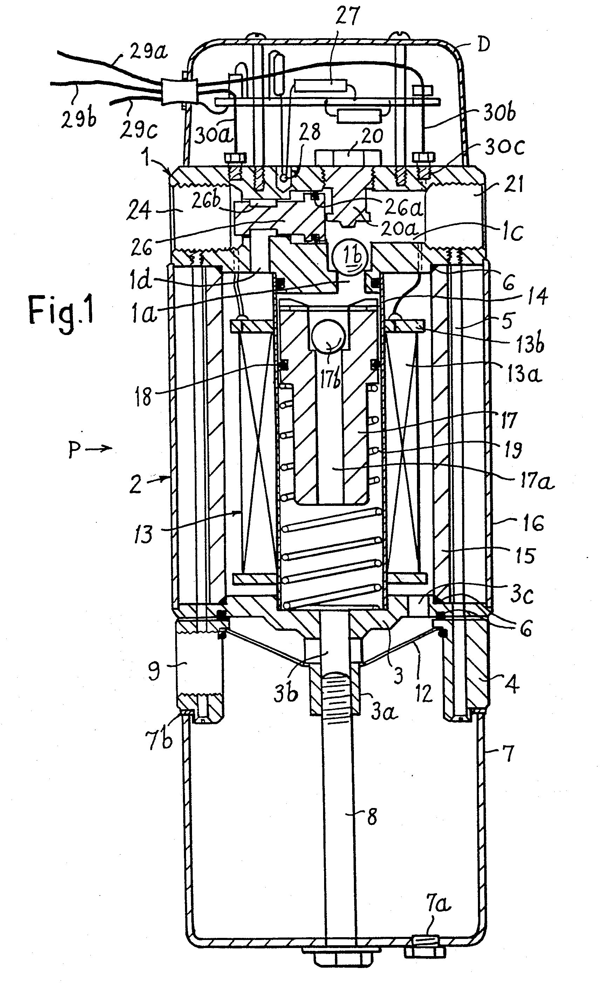

Referring to Figure 1, the combined electromagnetic fuel pump and heater P comprises a cylindrical tubular pump housing or body assembled from an upper housing part or head 1, an intermediate housing part 2, a lower housing part or base 3, and an adaptor part or ring 4. The head 1 and adaptor ring 4 are formed from a non-magnetisable material such as an aluminium alloy, and the part 2 and base 3 are formed from, or include, a magnetisable material such as mild steel. The components 1 to 4 are secured together by tie bolts 5 circumferentially distributed around the longitudinal axis of the pump housing. Resilient seals comprising O-ring seals 6 are provided between the various components to prevent fuel leakage therebetween.

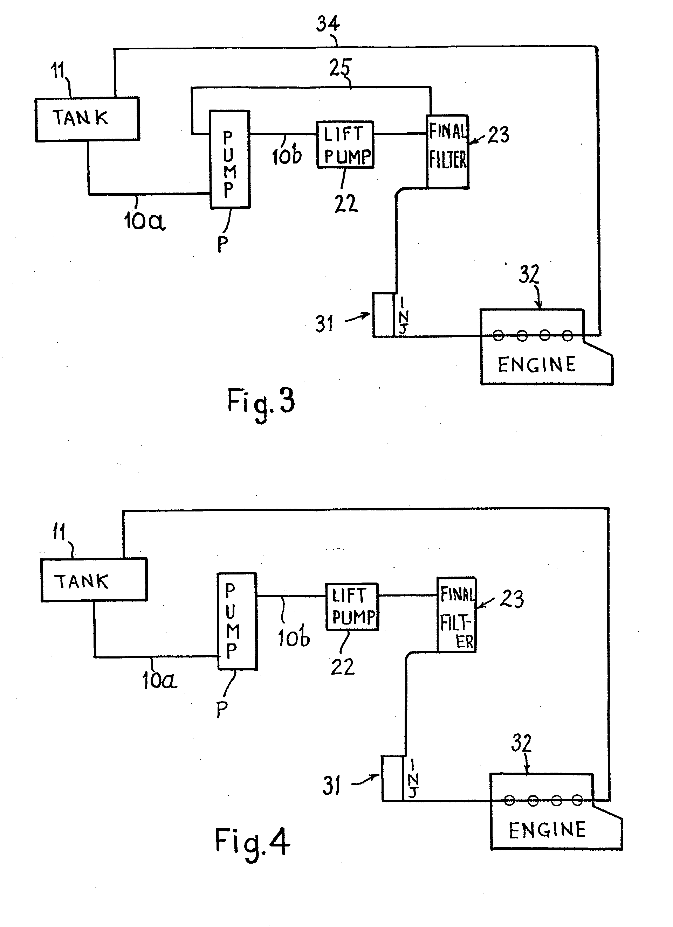

The portion of the pump housing below the base 3 forms a water trap filter, and includes a filter bowl 7, provided with a drain plug 7a, removably clamped beneath the adaptor ring 4, via a sealing washer 7c, by means of a retaining bolt 8 threaded into a tubular boss 3a depending from the base 3. The adaptor ring 4 is provided with a fuel inlet port 9 which, in operation, is connected via an appropriate union to the section 10a of the main fuel supply line from the vehicle fuel tank 11 as shown in Figure 3. The intermediate housing part 2 communicates with the fuel inlet port 9 and the chamber defined by the filter bowl 7 and adaptor 4a via an axial fuel inlet passage 3b in the boss 3a, and a lateral return passage 3c in the base 3. Interposed between the fuel inlet port 9 and the passages 3b and 3c is a frusto-conical filter screen 12, for example gauze screen, mounted on the boss 3a.

The intermediate housing part 2 incorporates an electromagnet or solenoid 13 including at least one winding 13a carried by a bobbin or former 13b. The winding 13a is mounted on an inner cylinder 14 of brass or other non-magnetisable material which is located at its lower end in a recess in the base 3, and is located at its upper end on a boss depending from the head 1 with the interposition of an O-ring seal 6. The solenoid 13 and inner cylinder 14 are concentrically surrounded by an intermediate casing or cylinder 15 of steel or other magnetisable material, located against shoulders on the head 1 and base 3 with the interposition of O-ring seals 6. An outer casing or cylinder 16, which may also be of metal, or of any other appropriate material, concentrically surrounds the intermediate cylinder 15. The cylinders 15 and 16 provide therebetween an annular space, through which the tie bolts 5 pass. The space may be filled with a thermally insulating material, such as a synthetic plastics foam material. The cylinders 14 and 15 provide therebetween an annular fuel-receiving cavity containing the solenoid winding 13a, and communicate with the filter chamber via the passage 3c.

The steel intermediate cylinder 15 and base 3 serve to concentrate the magnetic field generated by the solenoid winding 13a, and the base 3 serves as a pole piece for the solenoid.

The brass cylinder 14, between the head 1 and base 3, defines a pumping chamber, communicating with the filter chamber via the passage 3b, and containing a solenoid core or armature in the form of a reciprocable piston 17 fitted with a sealing ring 18. The piston 17 is normally urged upwardly to the position shown in Figure 1, when the winding 13a is de-energised, by a compression or return spring 19. The piston 17 has an axial through passage 17a which is provided with a check or non-return valve 17b adjacent its upper end. The check valve 17b comprises a ball which seats in a stepped upper end portion of the passage 17a, the ball being retained in the stepped portion by an appropriate apertured retainer above the ball.

Above the piston 17 and communicating with the passage 17a, the head 1 is formed with an upwardly extending through passage 1a which also incorporates a check or non-return valve 1b, similar to the check valve 17b, comprising a ball located in a stepped upper end portion of the passage 1a. The upper end of the passage 1a communicates with a transverse, stepped passage 1c in the head 1, and the ball of the check valve 1b is prevented from passing upwardly out of the passage 1a by a stop 20a formed by the lower end of a bolt 20 threaded downwardly into the head 1.

The right-hand end of the transverse passage 1c as viewed in Figure 1 communicates with the upper end of the passage 1a, and constitutes a fuel outlet port 21 which, in operation, is connected via an appropriate union to the section 10b of the main fuel supply line leading to the intake side of a conventional lift pump 22 as shown in Figure 3, the outlet side of the lift pump being connected to the upstream or "dirty" side of a final fuel filter 23. The left-hand end of the passage 1c constitutes a fuel return port 24 which, in operation, is connected by a return line 25 to the upstream or "dirty" side of the final filter 23.

The return port 24 is isolated from the upper end

of the passage 1a by a reciprocable valve element comprising a stepped spool 26 provided with an O-ring seal 26a. The enlarged head of the spool 26 cooperates with the stop 20a in its right-most position shown in Figure 1, and may be urged towards this position by a bias spring (not shown). In this position, the spool 26 closes the upper end of a passage 1d in the head 1 which communicates with the annular fuel-receiving cavity between the cylinders 14 and 15. When the spool 26 is displaced to to the left due to pressure exerted on the right-hand end face of the enlarged head of the spool 26, against the action of the bias spring, the passage 1d is placed in communication with the fuel return port 24 via an annular groove 26b in the spool 26.

Mounted on the head 1, protected by a dust cover D, is the electrical control circuitry of the pump P. This comprises a circuit board 27 carrying the majority of the electrical components, and a temperature sensor 28 such as a thermistor, located in a blind passage in the top of the head 1. The circuitry is connected to input leads 29a, b and c, and to output leads 30a and 30b connected to the solenoid winding 13a and passing, via seals 30c, through the head 1.

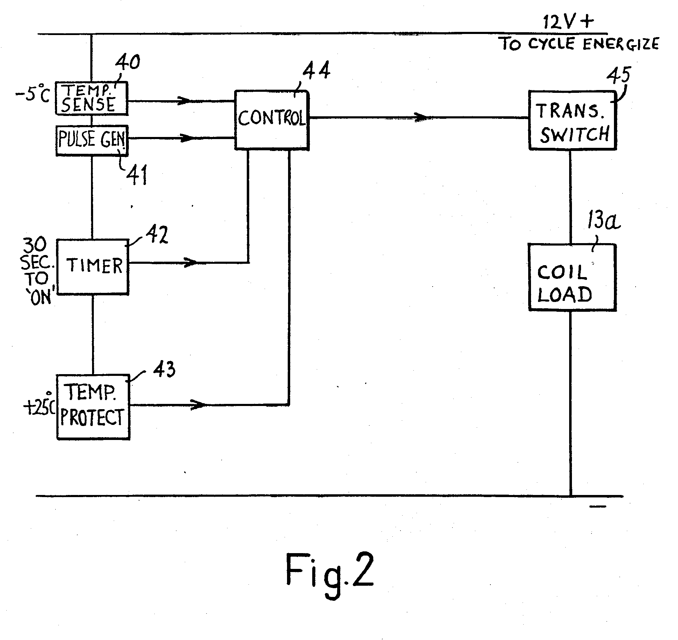

As shown schematically in Figure 2, the circuitry basically includes a temperature sensing circuit 40 which includes or is connected to the sensor 28 of Figure 1, a pulse generator circuit 41, a timer circuit 42, and a temperature sensing protective circuit 43, connected as inputs to a control unit 44. The circuit 43 includes or is connected to a temperature sensor (not shown) which is mounted, like the sensor 28, in the head 1 of the pump P. The control unit output is connected via a heavy duty transistorised switching device 45 to the solenoid winding 13a. The circuitry is energised via the normal 12 volt negative-earth electrical system of the vehicle.

The circuitry is adapted to place the pump P in one of three basic modes of operation. In a first de-energised non-pumping mode, when the temperature sensed by the sensor 28 is at or above a predetermined mimimum, for example at or above $-5^{O}C$, the sensing circuit 40 input to the control unit 44 causes the latter to maintain the switching device 45 open, and the winding 13a is maintained de-energised. In a second, continuously energised, non-pumping mode, when the sensed temperature is at or below $-5^{O}C$, the sensor circuit 40 causes the control unit 44 to close the switching device 45, and the winding 13a is continuously energised. As a result, the piston 17 is attracted by the pole piece or base 3, and is retained in a lowermost position against or adjacent the base 3, compressing the return spring 19. In a third pumping mode, when the sensed temperature is at or below $-5^{O}C$, the pulse generator circuit 41 is actuated to cause the control circuit 44 to pulse the switching device 45, and the winding is pulsed with energising current, causing the piston 17 to reciprocate.

In the first and second modes, in which the piston 17 is stationary, the check valves 17b and 1b will allow the lift pump 22 to draw fuel through the pump P, along the path including the fuel inlet port 9, passages 3b and 17a, check valves 17b and 1b and fuel outlet port 21. The suction in the fuel outlet port 21 will retain the spool 26 in its right-hand position shown, closing off the passage 1d. In the third pumping mode, during each downward (winding energised) stroke of the piston 17, the check valve 1b will remain closed and the check valve 17b will open to allow fuel to pass up the passage 17a into the space above the piston. During each upward (winding de-energised) stroke of the piston 17, the check valve 17b will close and the piston, under the action of the return spring 19, will force fuel above the piston through the check valve 1b and out of the fuel outlet port 21. The pressure in the outlet port, if and when it exceeds 50% of the maximum pumping pressure (for example 50 p.s.i.) created by the piston, will cause the spool 26 to move to its left hand position, interconnecting the passage 1d and return port 24. The spool bias spring may be of such a strength that it retains the spool 26 in its right hand closed position until the pressure in the outlet port 21 reaches or exceeds, for example 50% of the maximum pressure which occurs in the outlet port and associated fuel lines during the pumping mode.

Referring now to the system shown in Figure 3, as previously described, the pump P of Figure 1 is simply connected in series with the main fuel line, in place of the normal water trap filter, between the fuel tank 11 and lift pump 22, with the addition of the return line 25 between the chassis-mounted final filter 23 and pump P. The normal water trap filter, which is the first filter stage in the fuel line, is normally chassis-mounted and located relatively close to the tank, i.e. connected thereto by a line which is short in relation to the line between the first stage filter and the final filter 23. As is usual, the downstream or "clean" side of the final filter 23 is connected via an injector pump 31 to the fuel injectors of the diesel engine 32.

The system operates as follows:

When the vehicle has been parked, and if the temperature sensed by the sensor 28 is -5°C or less, actuation of the engine starter, as well as starting the engine, causes the control circuitry to place the pump P in the continuously energised, non-pumping mode, and to initiate operation of the circuit timer. The winding 13a is consequently supplied with an energising current, for example an average on-state current of approximately 22 amps at 12 volts (approximately 250 to 300 watts), for a set "warm-up" period of up to approximately 20 seconds, for example 6 seconds, during which time the heat generated by the winding 13a heats the residual fuel between the cylinders 14 and 15, and within the pumping chamber within the cylinder 14.

At the end of the set period, the timer causes the control circuitry to switch the pump to its pumping mode for approximately 30 seconds. During this time, the winding 13a is energised, for example 50 to 60 times by the pulse generator circuit, to deliver an excess amount of liquified heated fuel, via the lift pump 22, to the head or header of the final filter 23 on the upstream or "dirty" side of the final filter element. The pump P may, for example deliver 30 c.c. of fuel per pulse or "shot". The heated fuel will be driven out of the outlet port 21 with sufficient pressure to displace the spool 26 to its open left hand position, and to displace any solidified fuel in the lines and/or lift pump between the pump P and final filter 23, in the final filter header, and/or in the return line 25. The heated fuel flows back from the final filter header through the return line 25 to the return port 24 and via the groove 26b, in the spool 26 and passage 1d to the cavity between the cylinders 14 and 15 where it is again heated by the winding 13a. The heated fuel then passes through the passage 3c into the space above the filter screen 12, heating and melting any wax blocking the latter, and passing through the latter into the filter bowl 7. From the filter bowl, the fuel passes via the passage 3b back into the pump chamber where it will be further heated by the winding 13a and residual heat in the pump P as a whole. This repeated heating and recirculation of fuel to the final filter header melts any wax blocking the final filter element (and water trap filter element) before the fuel on the downstream or "clean" side of the final filter has been consumed by the engine and therefore before the engine stalls. Once the final filter is unblocked, a proportion of the heated fuel in the header will flow through the filter element to the engine. The unblocking of the filter element also causes a pressure drop in the outlet port 21, and the spool 26 returns to its closed right-hand position under the effect of its bias spring, whereafter excess pumped fuel will be returned to the tank via the normal overspill line 34.

During the pumping mode, the powerful and positive pumping action of the piston 17 will be sufficient to make up any fuel deficit in the recirculation loop by drawing relatively viscous or virtually solid, unheated fuel along the relatively short line 10a from the tank 11 into the filter bowl 7 via the inlet port 9. This cold fuel will mix with the warm fuel returned from the final filter, and the mixture will be pumped through the piston passage 17a and pumping chamber within the cylinder 14, where it will be heated as previously described.

After the 30 second pumping mode, the pump P is returned to its continuously energised, non-pumping mode. The lift pump 22 alone then serves to draw fuel from the tank 11, and supply it, via the series-connected pump P, to the final filter 23. The closed spool 26 prevents the fuel pumped by the lift pump 22 from recirculating to the pump P via the line 25 instead of passing through the filter 25 to the injectors. Thus, the continuously energised winding 13a serves to heat the fuel from the tank as it is drawn through the pump via the pumping chamber and open check valves 17b and 1b. The solidified fuel will usually initially be cleared from the line 10a between the tank 11 and pump P during the pumping mode of the pump, but in any event, due to the relatively short length of the line 10a (for example a run of 3 or 4 ft. as distinct from a run of 15 ft. or more between the pump P and final filter) the lift pump would be capable of drawing the solidified fuel the short distance to the pump P. The fuel in the line 10a is replaced by liquid fuel from the tank which, due to its bulk, and also possibly due to the introduction of warmed fuel from the engine via the overspill line 34, will be at a higher temperature.

The pump P is maintained in its continuously energised mode until the temperature of the head 1 sensed by the sensor (not shown) of the circuit 43 in Figure 2 corresponds to an adequate fuel temperature, for example until the sensed head temperature reaches $+25^{\circ}$C. The circuit 43 then causes the control unit 44 to switch the pump to its de-energised mode, and the pump remains in this mode unless and until the head temperature drops to a value at which a risk of waxing exists, for example to $-5^{\circ}$C or less. Should the head temperature drop to or below this value, then the pump will be switched to its continuously energised non-pumping mode again, until the head temperature rises to or above $+25^{\circ}$C. The timed sequence of 6 seconds continuous energisation followed by 30 seconds pumping only occurs upon initial start-up of the engine, and is triggered by an appropriate signal from the vehicle starter circuit, applied to the control circuit via the connection 29c.

The system just described has been found to enable a diesel engined vehicle to be started and run satisfactorily at temperatures down to -35°C after standing overnight.

However, at lower ambient temperatures, and/or if the vehicle is standing for longer periods of time, the bulk of fuel in the tank tends to solidify, as well as the fuel in the relatively exposed fuel lines and final filter. Under such conditions, the lift pump may not be able to draw fuel from the tank when, during the previously described heating sequence upon start-up, the pump P switches from its pumping mode to its continuously energised, non-pumping mode. Figure 4 illustrates an embodiment of system which overcomes this problem by maintaining the ambient temperature of the fuel in the tank and system at an acceptable value prior to start-up.

The system illustrated in Figure 4 is fundamentally similar to that illustrated in Figure 3, with the exception that the return line 25 is omitted and the control circuitry is modified or adapted so as to pulse the solenoid winding 13a at intervals whilst the vehicle is parked. For example, by pulsing the winding once, so as to deliver a single shot of fuel, every 15 to 20 seconds, the pump P draws fuel from the tank 11, heats it momentarily, and forces it through the lift pump 22, final filter 23, injector pump 31, and back to the fuel tank via the conventional overspill line 34 connected to the engine injectors. This system has been found to keep the lines, etc. virtually wax-free, and to raise the temperature of 20 gallons of fuel in the tank by approximately 8°C. Due to the current drain, the pump P is preferably supplied by an auxiliary power supply, such as an auxiliary battery, and is capable of operating continuously for a maximum time of 72 hours on an auxiliary battery.

Pumping may commence when the temperature drops to or below -5°C, and may continue until engine start-up, when the pump P preferably switches to its continuously energised non pumping mode. However, since the pump P in the system of Figure 4, is intended to maintain the fuel in the tank and lines liquid, and to maintain the fuel in the final filter above a temperature at which it will wax and block the filter element, the pump P could alternatively be de-energised when the engine is started, provided that the temperature sensed by the sensor 28 is not less than -5°C. If the temperature is, or should, during operation, drop, to or below the latter temperature, then the pump P may be switched to its continuously energised mode as previously described with reference to Figure 3. However, as in the previous embodiment, once the engine has been running for a relatively short period of time, the heat transferred from the engine to the fuel returned to the tank via the overspill line 34 should be sufficient to maintain the temperature of the fuel in the tank at an acceptable value.

From the foregoing, it will be seen that there is provided a particularly advantageous combined pump and heater which overcomes the problems associated with waxing of the fuel in the final filter, and/or the water trap filter, and/or the fuel lines, and enables a diesel engine to be started and run at temperatures well below the Cloud Point of the fuel, for example down to $-35^{\circ}C$ and below.

The combined pump and heater is relatively simple in operation, and is capable of being installed in a relatively simple manner, simply by substituting it for the water trap filter conventionally employed. No other modifications to the existing fuel system are necessary, and the existing fuel lines are utilised. The system shown in Figure 3 requires an additional line, i.e. the return line 25, which is simply connected into one of the blanked off ports or unions usually provided in the head on the "dirty" side of conventional final filters. The system shown in Figure 4 requires no additional line.

It will be understood that various modifications may be made without departing from the scope of the present invention.

For example, the heating provided by the solenoid winding 13a may be supplemented by an additional winding, or other electrical heating element, located within the pump. Thus, the energising winding may be designed to give the optimum characteristics required to operate the piston 17, whilst the other winding or windings, and/or heating elements may be designed to give the optimum heating requirements.

The electromagnetic pump may take a variety of different forms. For example, the electromagnet armature or core may be connected to a piston or other pumping element, instead of directly forming a pumping piston.

The pump may be divorced from the water trap filter, although the fuel line will then require modification to incorporate the pump.

In the illustrated pump P, the pumping stroke of the piston 17 is powered by the return spring 19. However, the operation may reversed, the pumping stroke being produced by energising the winding, and the return stroke being effected by the return spring.

The pumping volume of the pump P may be varied, or made adjustable, so as to render the pump suitable for different systems, and, similarly, the timing and temperature control circuits may be modified or adjustable. The control circuit may be adapted, or made adjustable, to vary the maximum and/or minimum temperatures at which the circuit will be triggered, and/or to vary the initial "warm-up" or continuously energised mode period in the Figure 3 embodiment, and/or to vary the pumping mode period, frequency and/or mark/space ratio in the Figure 3 or Figure 4 embodiment.

The control circuit may be adapted to permit the pump P to be switched to operate in accordance with Figure 3, or in accordance with Figure 4. Since this will necessitate the provision of return line 25, the spool valve 26 may be adapted, or an additional valve such as an electromagnetic valve or equivalent, may be provided, to shut off the return line 25 when operating in accordance with Figure 4.

CLAIMS

1.    An electromagnetic pump capable of pumping diesel fuel when in a relatively low temperature viscous condition, characterised in that it includes a pump housing (1, 3, 15) and electromagnetic means (13) operable to pump fuel through the  housing, the electromagnetic means (13) being operable to transfer to the fuel, heat generated in the electromagnetic means (13) by energisation thereof.

2.    An electromagnetic pump capable of pumping diesel fuel when in a relatively low temperature viscous condition, including a pump housing (1, 3, 15) having at least one fuel inlet (9), a fuel outlet (21), and a fuel flow path interconnecting the fuel  inlet and outlet, and a solenoid (13) within the pump housing, having an energising winding (13a) and a core (17) which, in a pumping mode of the pump (P), is axially reciprocable within the energising winding upon energisation and/or de-energisation of the solenoid to cause diesel fuel to be displaced towards the fuel outlet (21), characterised in that the pump housing (1, 3, 15) defines a pumping chamber in said flow path containing the solenoid (13), the solenoid, in use of the pump, being at least partially immersed in fuel in the chamber so as to transfer to the fuel, heat generated in the energising winding (13a)  due to energisation thereof.

3.    A pump as claimed in claim 2, wherein the core (17) forms a piston which, in the pumping mode of the pump, is operable to positively displace fuel from the pumping chamber towards the outlet via a passage (17a) extending through the piston.

4.    A pump as claimed in claim 3, wherein the pumping chamber is partly defined by a cylinder (15) generally coaxial with and surrounding the solenoid (13), and an end wall (3) closing one end of the cylinder and disposed adjacent one axial end of the solenoid, the cylinder (15) and end wall (3) being formed from a magnetisable material and serving to concentrate the magnetic field generated by the energising winding (13a), and the end wall forming  a pole piece for the solenoid, towards which the core (17) is attracted when the energising winding (13a) is energised.

5.    A pump as claimed in claim 4, wherein the end wall (3) forms the base of the pumping chamber, the cylinder (15) forms the side wall of the chamber, and a cylinder head (1) of non-magnetisable material forms the upper end wall of the chamber, a filter chamber (7) being mounted below the end wall (3), and being provided with the fuel inlet (9) which comprises a primary fuel inlet intended to be connected to a diesel fuel tank, the inlet (9)     communicating with the lower end of the pumping chamber via a filter element (12) and a passage (3b) in the end wall (3), and the cylinder head (1) incorporating the fuel outlet (21) which communicates with the upper end of the pumping chamber.

6.    A pump as claimed in claim 5, wherein the pumping chamber is divided into inner and outer concentric zones by a cylinder (14) of non-magnetisable material extending between the upper and lower end walls, within which the piston (17) is reciprocatably mounted, the pumping chamber inlet passage (3b) communicating with the inner zone below the piston (17), the outlet (21) communicating with the inner zone above the piston, and the outer zone communicating with the inner zone via an outlet passage (3c) from the pumping chamber in the end wall (3), the filter chamber (7), and the pumping chamber inlet passage (3b).

7. A pump as claimed in claim 6, wherein the cylinder head includes a secondary fuel inlet (24) communicating with the outer zone of the pumping chamber via a valve (26) which, in use, is controlled in dependence upon the relative pressures of the fuel in the secondary inlet (24) and outlet (21).

8. A pump as claimed in claim 5, 6 or 7, including a first non-return valve (17b) associated with the passage (17a) in the piston (17), and a second non-return valve (1b) disposed in said flow path between the fuel outlet (21) and the pumping chamber, the non-return valves being operable to cause fuel to be pumped unidirectionally along said flow path in the operating mode of the pump (P), and to allow fuel to the drawn through the pump (P) by an external pump (22) when the pump (P) is in a non-pumping mode.

9. A diesel engine fuel system incorporating a pump as claimed in any preceding claim, the pump (P) being connected in series in the main fuel line (10a, 10b) between the fuel tank (11) and a filter (23) on the upstream side of the filter element thereof, via the inlet 9 and outlet 21, the filter (23), on the downstream side of the filter element thereof, being connected to the injectors of the diesel engine (32), whereby, when the pump is in its pumping mode, fuel heated by the pump is supplied to the filter (23) on the upstream side of the filter element thereof.

10.      A system as claimed in claim 9 in combination with claim 7, including a return line (25) connecting the filter (23),on the upstream side of the filter element thereof, to the secondary fuel inlet (24) of the pump (P), whereby, when the pump is in its pumping mode, fuel heated by the pump is supplied to the upstream side of the filter element, and excess fuel is returned to the pump (P) via the line (25).

11.      A system as claimed in claim 9, wherein the injectors of the engine (32) are connected to the fuel tank (11) by a return line (34), and wherein the pump (P), when in its pumping mode, pumps heated fuel to and through the        filter (23) to the injectors, and back to the fuel tank (11) via the return line (34).

12.      A system as claimed in claim 9,10 or 11, wherein the pump (P) is associated with control means (27, 28) operable to sense the temperature of the pump housing or fuel therein, and maintain the winding (13a) in a de-energised state and the pump (P) in a non-pumping mode until the temperature drops to or below a value in the region of, or below, the Cloud Point of the fuel, the control means further being operable, when the temperature drops to or below the set value, either to continually energise the winding (13a) in an energised non- pumping mode of the pump so as to heat up the winding (13a) and therefore fuel in or flowing through the pumping chamber, or to pulse the winding (13a) in the pumping mode of the pump so as to   reciprocate the piston (17) and both heat and pump the fuel.

13.    A system as claimed in claim 12, wherein the control means (27,28) is operable, when the temperature is at or below the set value and when the engine (32) is initially started from cold, to initially maintain the pump (P) in its energised non-pumping mode for a short period of time, then to switch to its pumping mode, and then to switch back to its energised non-pumping mode for as long as the low temperature conditions persist.

14.    A system as claimed in claim 12 in combination with claim 11, wherein the control means (27, 28) is operable, when the temperature is at or below the set value, and when the engine is switched off for a period of time, to cause the pump (P) to circulate heated fuel through the fuel system and back to the tank at regular time intervals so as to maintain the temperature of the fuel in the system at an acceptable value.

Fig.1

Fig.2

Fig.3

Fig.4